# EUROPEAN PATENT SPECIFICATION

(11) **EP 4 270 725 B1**
(45) Date of publication and mention of the grant of the patent: **16.09.2026**
(21) Application number: 23170603.7
(22) Date of filing: 28.04.2023
(51) Int. Cl.: H02J 7/00, H01M 10/42, H02J 7/50, H02J 7/80, H02J 7/90

(54) **BATTERY PACK PARALLEL CIRCUIT AND DESIGN METHOD THEREFOR, BATTERY, AND CHARGE/DISCHARGE SYSTEM**
BATTERIEPACKPARALLELSCHALTUNG UND ENTWURFSVERFAHREN DAFÜR, BATTERIE UND LADE-/ENTLADESYSTEM
CIRCUIT PARALLÈLE DE BLOC-BATTERIE ET SON PROCÉDÉ DE CONCEPTION, BATTERIE ET SYSTÈME DE CHARGE/DÉCHARGE

(30) Priority: 29.04.2022 CN 202210483558
(43) Date of publication of application: 01.11.2023
(73) Proprietor: Shenzhen Kstar New Energy Company Limited, Shenzhen, Guangdong 518107 (CN)
(72) Inventor: LIU, Chengyu, Huizhou, 516006 (CN); GUO, Guanqing, Huizhou, 516006 (CN); HUANG, Jianliang, Huizhou, 516006 (CN); LI, Quangeng, Huizhou, 516006 (CN)
(74) Representative: Iannone, Carlo Luigi

(56) References cited:
- JP-A- H07 327 323
- US-A1- 2004 189 250
- US-A1- 2018 026 311
- US-A1- 2021 083 488

## Description

### TECHNICAL FIELD

The present disclosure relates to the field of batteries, and in particular to a battery pack parallel circuit and a design method therefor, a battery, and a charge/discharge system.

### BACKGROUND

In prior battery pack connection schemes, generally, battery packs are connected in parallel to solve the problem that the whole battery is affected by cell fault of a single battery pack. However, the parallel connection mode in the prior art cannot achieve parallel current sharing, which affects the use and service life of the battery.

Relevant prior art is established by the document: US 2018/026311 A1 (HINTERBERGER MICHAEL [DE] ET AL) 25 January 2018 (2018-01-25)

### SUMMARY

The main purpose of the present disclosure is to propose a battery pack parallel circuit and a design method therefor, a battery, and a charge/discharge system, to solve the problem that the prior art cannot achieve parallel equalization of flow of the battery pack.

To achieve the above purpose, the present disclosure provides a battery pack parallel circuit. The circuit is connected to a charge/discharge apparatus, the circuit includes a battery module formed by a plurality of battery packs connected in parallel, and battery packs located at two ends of the battery module are a first end battery pack and a second end battery pack respectively; and
a positive terminal of the first end battery pack is configured as a positive terminal of the circuit and connected to a positive connection terminal of the charge/discharge apparatus, and a negative terminal of the second end battery pack is configured as a negative terminal of the circuit and connected to a negative connection terminal of the charge/discharge apparatus.

Optionally, the battery module includes at least one resistor pair formed by a positive resistor and a negative resistor; the positive resistor has an equivalent resistance of a connection impedance between positive charge terminals of two adjacent battery packs, and the negative resistor has an equivalent resistance of a connection impedance between negative charge terminals of the two adjacent battery packs; and a resistance ratio of the positive resistor to the negative resistor in the resistor pair satisfies a battery pack current sharing condition.

Optionally, if cell internal resistances of all of the plurality of battery packs connected in parallel are identical, a first resistance ratio of the positive resistor to the negative resistor in the resistor pair satisfies:
$\left(N-i\right) {R}_{i +} = {iR}_{i -}$

N is the number of the battery packs, i is a serial number of the resistor pair, a serial number of a resistor pair closest to the positive connection terminal of the charge/discharge apparatus is 1, *R*_{*i*+} is the positive resistor, and *R*_{*i*-} is the negative resistor.

Optionally, if a cell internal resistance of at least one battery pack is different from cell internal resistances of the other battery packs, the positive resistor and the negative resistor in the resistor pair satisfy a second resistance ratio, and the second resistance ratio is calculated based on Kirchhoff's voltage theorem and the cell internal resistance of each of the battery packs.

Optionally, the charge/discharge apparatus comprises a charger, an inverter, or a converter.

Further, to achieve the above purpose, the present disclosure further provides a design method for a battery pack parallel circuit. The method is applied to the battery pack parallel circuit as described above, and the method includes:
obtaining a battery pack parameter of each battery pack and a battery pack current sharing condition; and
calculating resistances of a positive resistor and a negative resistor in each resistor pair based on each battery pack parameter, to enable that the resistances satisfy the battery pack current sharing condition, where the positive resistor has an equivalent resistance of a connection impedance between positive charge terminals of two adjacent battery packs, and the negative resistor has an equivalent resistance of a connection impedance between negative charge terminals of the two adjacent battery packs.

Optionally, the step of calculating the resistances of the positive resistor and the negative resistor in each resistor pair based on each battery pack parameter may include:
calculating a resistance ratio of the positive resistor to the negative resistor in each resistor pair based on each battery pack parameter; and
determining the resistances of the positive resistor and the negative resistor based on the resistance ratio.

Optionally, the step of calculating the resistance ratio of the positive resistor to the negative resistor in each resistor pair based on each battery pack parameter may include:
obtaining a cell internal resistance of each battery pack from each battery pack parameter;
determining whether cell internal resistances of all the battery packs are identical; and
if the cell internal resistances of all the battery packs are identical, determining that the resistance ratio of the positive resistor to the negative resistor in each resistor pair satisfies:
   $\left(N-i\right) {R}_{i +} = {iR}_{i -}$
N is the number of the battery packs, i is a serial number of the resistor pair, a serial number of a resistor pair closest to a positive connection terminal of the charge/discharge apparatus is 1, *R*_{*i*+} is the positive resistor, and *R*_{*i*-} is the negative resistor.

Optionally, after the step of determining whether the cell internal resistances of all the battery packs are identical, the design method method may further include:
obtaining the cell internal resistance of each battery pack if a cell internal resistance of at least one battery pack is different from cell internal resistances of the other battery packs; and
calculating the resistance ratio of the positive resistor to the negative resistor in each resistor pair based on Kirchhoff's voltage theorem and the cell internal resistance of each battery pack.

Optionally, the battery pack current sharing condition comprises a resistance ratio of the positive resistor to the negative resistor, wherein the resistance ratio was calculated and stored in advance in different cases.

Further, to achieve the above purpose, the present disclosure further provides a battery. The battery includes a shell and the battery pack parallel circuit as described above.

Further, to achieve the above purpose, the present disclosure further provides a charge/discharge system. The system includes a charge/discharge apparatus and the battery pack parallel circuit as described above.

Optionally, further comprising a shell, wherein the shell forms a battery with the battery pack parallel circuit, and the battery is connected to the charge/discharge apparatus.

The present disclosure provides a battery pack parallel circuit and a design method therefor, a battery, and a charge/discharge system. The circuit is connected to a charge/discharge apparatus, the circuit includes a battery module formed by a plurality of battery packs connected in parallel, and battery packs located at two ends of the battery module are a first end battery pack and a second end battery pack respectively; and a positive terminal of the first end battery pack is configured as a positive terminal of the circuit and connected to a positive connection terminal of the charge/discharge apparatus, and a negative terminal of the second end battery pack is configured as a negative terminal of the circuit and connected to a negative connection terminal of the charge/discharge apparatus. The connection mode to the charge/discharge apparatus is modified to enable the current to flow in/out from the positive terminal of the parallel battery packs and flow out/in from the farthest negative terminal on the diagonal, to adjust the parameters of the impedance devices with different current directions, such that parallel current sharing of the battery packs can be achieved by adjusting the impedance devices in the circuit.

### BRIEF DESCRIPTION OF THE DRAWINGS

To describe the technical solutions in the embodiments of the present application or in the prior art more clearly, the following briefly describes the accompanying drawings required for describing the embodiments or the prior art. Apparently, the accompanying drawings in the following description show some embodiments of the present application, and those of ordinary skill in the art may still derive other drawings from these accompanying drawings without creative efforts.
FIG. 1 is a functional module diagram of an embodiment of a battery pack parallel circuit according to the present disclosure;
FIG. 2 is a schematic diagram of battery packs connected in parallel according to the prior art;
FIG. 3 is a schematic diagram of four battery packs connected in parallel in an embodiment of a battery pack parallel circuit according to the present disclosure;
FIG. 4 is a schematic diagram of an indeterminate number of battery packs connected in parallel in an embodiment of a battery pack parallel circuit according to the present disclosure;
FIG. 5 is a schematic diagram of two battery packs connected in parallel in an embodiment of a battery pack parallel circuit according to the present disclosure;
FIG. 6 is a schematic diagram of three battery packs in an embodiment of a battery pack parallel circuit according to the present disclosure;
FIG. 7 is a flowchart of an embodiment of a design method for a battery pack parallel circuit according to the present disclosure; and
FIG. 8 is a flowchart of step S20 in an embodiment of a design method for a battery pack parallel circuit according to the present disclosure.

### DETAILED DESCRIPTION OF THE EMBODIMENTS

Understandably, the specific embodiments described herein are merely intended to explain the present disclosure but not to limit the present disclosure.

The following clearly and completely describes the technical solutions in the embodiments of the present application with reference to the accompanying drawings in the embodiments of the present application. Apparently, the described embodiments are merely a part rather than all of the embodiments of the present application. All other embodiments obtained by those of ordinary skill in the art based on the embodiments of the present disclosure without creative efforts should fall within the protection scope which is defined by the appended claims.

It should be noted that all the directional indications (such as upper, lower, left, right, front, and rear) in the embodiments of the present disclosure are merely used to explain relative position relationships, motion situations, and the like of the components in a specific gesture (as shown in the figures). If the specific gesture changes, the directional indication also changes accordingly.

Moreover, the terms such as "first" and "second" used herein are only for the purpose of description and are not intended to indicate or imply relative importance, or implicitly indicate the number of the indicated technical features. Therefore, a feature limited by "first" or "second" may explicitly or implicitly include at least one such feature. Further, the technical solutions of the embodiments may be combined with each other on the basis that the combination is implementable by those of ordinary skill in the art. In case a combination of the technical solutions is contradictory or infeasible, such a combination is deemed inexistent and not falling within the protection scope which is defined by the appended claims.

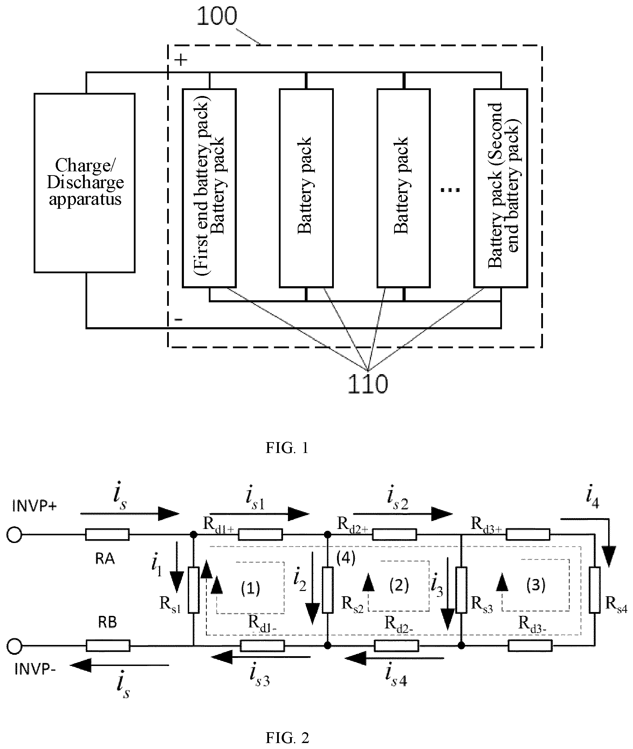

The present disclosure provides a battery pack parallel circuit applied in a charge/discharge system. FIG. 1 is a functional module diagram of an embodiment of the battery pack parallel circuit according to the present disclosure. In this embodiment, the circuit is connected to a charge/discharge apparatus, and the circuit includes battery module 100 formed by a plurality of battery packs 110 connected in parallel. Battery packs 110 located at two ends of the battery module 100 are a first end battery pack and a second end battery pack respectively. A positive terminal of the first end battery pack is configured as a positive terminal of the circuit and connected to a positive connection terminal of the charge/discharge apparatus, and a negative terminal of the second end battery pack is configured as a negative terminal of the circuit and connected to a negative connection terminal of the charge/discharge apparatus.

It should be understood that the charge/discharge apparatus is any apparatus that can be connected to the battery, including but not limited to a charger, an inverter, a converter, or the like.

The magnitude of the charge/discharge current between the battery packs connected in parallel is affected by the impedance of the battery pack parallel network, and the impedance mainly includes an external impedance and an internal impedance. The internal impedance includes the cell internal resistance, the impedance of the connection wire for connecting the cells in series, and the impedance of the connection wire for connecting to a battery management system (BMS). In general, the cell internal resistances are basically identical when a same batch of cells are used, and in the ideal state, the cell internal resistances of the battery packs are identical. Due to the same wiring method and production process of the battery packs, in the ideal state, the impedance of the connection wire for connecting the battery packs in series is identical to the impedance of the connection wire for connecting to the BMS. The external impedance includes the connection terminal impedance between positive and negative connection terminals of the charge/discharge apparatus and the parallel battery packs. In general, the connection terminal impedances are basically identical when the type and production process of the connection terminals are identical. Therefore, during actual application, the greatest impact on current sharing is the wire impedance between the charge/discharge apparatus and the battery packs and the wire impedance between the battery packs and the electromagnetic environment. In this embodiment of this application, the same internal impedance means that the internal impedances are identical within a specific error range.

FIG. 2 is a schematic diagram of battery packs connected in parallel according to the prior art. For example, there are four battery packs.

Resistors RA and RB have equivalent resistances of the connection terminal impedance and the wire impedance between positive and negative connection terminals of a charge/discharge apparatus and the battery packs connected in parallel. The impedances are the common connection impedance, which does not affect the internal of the battery pack parallel circuit, and thus can be ignored for current sharing.

Rₛ₁ to Rₛ₄ are a first cell internal resistance to a fourth cell internal resistance; R_{d1+} to R_{d3+} are a first positive equivalent resistance to a third positive equivalent resistance; R_{d1-} to R_{d3-} are a first negative equivalent resistance to a third negative equivalent resistance; i₁ to i₄ are a charge current of a first battery pack to a charge current of a fourth battery pack; and iₛ₁ to iₛ₄ are branch currents.

According to Kirchhoff's current theorem, the following can be obtained:
${i}_{s 1} = {i}_{2} + {i}_{3} + {i}_{4}$
${i}_{s 3} = {i}_{2} + {i}_{3} + {i}_{4}$

According to Kirchhoff's voltage theorem, the following can be obtained:
$\left({i}_{2}+{i}_{3}+{i}_{4}\right) \times {R}_{d 1 +} + {i}_{2} \times {R}_{s 2} + \left({i}_{2}+{i}_{3}+{i}_{4}\right) \times {R}_{d 1 -} = {i}_{1} \times {R}_{s 1}$

When current sharing is required on the battery packs, that is, when *i*₁ = *i*₂ = *i*₃ = *i*₄ = *i*, the following can be obtained:
${R}_{s 1} - {R}_{s 2} = 3 \left({R}_{d 1 +}+{R}_{d 1 -}\right)$

When cell internal resistances of the battery packs are identical, that is, when *R*_{*s*1} *= R*_{*s*2}, the following can be obtained:
$3 \left({R}_{d 1 +}+{R}_{d 1 -}\right) = 0$

During practical application, *R*_{*d*1+}>0 and *R*_{*d*1-}>0. In this case, current sharing can be achieved only when the charge current is 0. Therefore, current sharing of the battery packs cannot be achieved during operation of the circuit.

Similarly, when Rₛ₁<Rₛ₂, the following can be obtained:
$3 \left({R}_{d 1 +}+{R}_{d 1 -}\right) < 0$

Since *R*_{*d*1+}>0 and *R*_{*d*1-}>0, the circuit cannot achieve current sharing of the battery packs in this case.

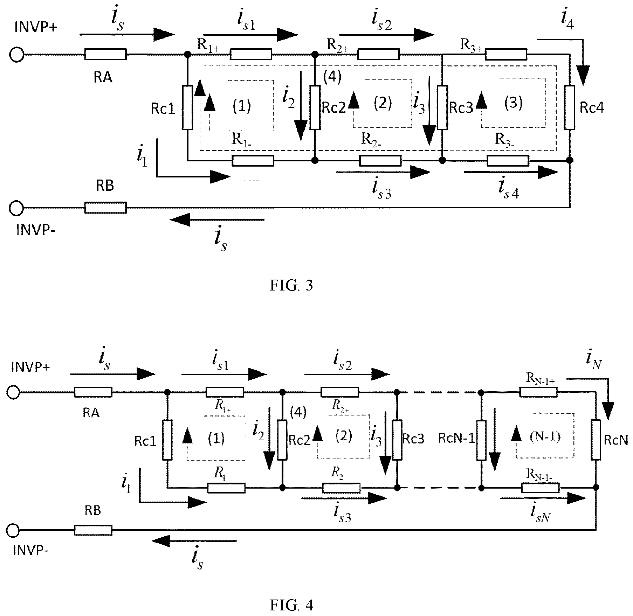

FIG. 3 is a schematic diagram of four battery packs connected in parallel in this embodiment. Four battery packs are used as an example.

Resistors RA and RB have equivalent resistances of the connection terminal impedance and the wire impedance between positive and negative connection terminals of a charge/discharge apparatus and the battery packs connected in parallel.

R_{c1} to R_{c4} are a first cell internal resistance to a fourth cell internal resistance; R₁₊ to R₃₊ are a first positive equivalent resistance to a third positive equivalent resistance; R₁₋ to R₃₋are a first negative equivalent resistance to a third negative equivalent resistance; i₁ to i₄ are a charge current of a first battery pack to a charge current of a fourth battery pack; and iₛ₁ to iₛ₄ are branch currents.

According to Kirchhoff's current theorem, the following can be obtained:
${i}_{s 1} = {i}_{2} + {i}_{3} + {i}_{4}$

According to Kirchhoff's voltage theorem, the following can be obtained:$\left({i}_{2}+{i}_{3}+{i}_{4}\right) \times {R}_{1 +} + {i}_{2} \times {R}_{c 2} = {i}_{1} \times \left({R}_{c 1}+{R}_{1 -}\right)$

When current sharing is required on the battery packs, that is, when *i*₁ = *i*₂ = *i*₃ = *i*₄ = *i*, the following can be obtained:
$3 \times {R}_{1 +} + {R}_{c 2} = {R}_{c 1} + {R}_{1 -}$

When cell internal resistances of the battery packs are identical, that is, when *R*_{*c*1} *= R*_{*c*2}, the following can be obtained:
$3 \times {R}_{1 +} = {R}_{1 -}$

When cell internal resistances of the battery packs are different, for example, when R_{c1}<R_{c2}, the following can be obtained:
$3 \times {R}_{1 +} - {R}_{1 -} < 0$

When R_{c1}>R_{c2}, the following can be obtained:
$3 \times {R}_{1 +} - {R}_{1 -} > 0$

That is, current sharing of the battery packs can be achieved by setting a ratio of *R*₁₊ to *R*₁₋.

It can be understood from FIG. 2 that in the prior art, in a single mesh such as the first mesh, the current directions of R_{d1+}, Rₛ₂ and R_{d1-} are clockwise, while the current direction of Rₛ₁ is counterclockwise. Therefore, when a resistance ratio of Rₛ₁ to Rₛ₂ is fixed, current sharing of the battery packs cannot be achieved by adjusting R_{d1+} and R_{d1-} with the same current direction.

As can be seen from FIG. 3, in this embodiment, in a single mesh such as the first mesh, the current directions of R₁₊ and R_{c2} are clockwise, while the current directions of R₁₋ and R_{c1} are counterclockwise. Therefore, when a resistance ratio of R_{c1} to R_{c2} is fixed, current sharing of the battery packs can be achieved by adjusting R₁₊ and R₁₋ due to their opposite current directions.

Compared with the prior art, this embodiment is able to achieve current sharing of the battery packs in all cases. It should be noted that this embodiment only illustrates the case of four battery packs. The same applies to the case of other numbers of battery packs, and details are not described herein. This embodiment applies to the parallel current sharing of the battery packs in the charging state and the discharging state, and the current sharing calculation of the battery pack parallel circuit in the discharging state is the same as that in the charging state.

In this embodiment, the connection mode between the charge/discharge apparatus and the battery module is modified to enable the current to flow in from the positive terminal of the parallel battery packs and flow out from the farthest negative terminal on the diagonal, or enable the current to flow out from the positive terminal of the parallel battery packs and flow in from the farthest negative terminal on the diagonal, to adjust the parameters of the impedance devices with different current directions, such that parallel current sharing of the battery packs can be achieved by adjusting the impedance devices in the circuit.

Further, the battery module includes at least one resistor pair formed by a positive resistor and a negative resistor; the positive resistor has an equivalent resistance of a connection impedance between positive charge terminals of two adjacent battery packs, and the negative resistor has an equivalent resistance of a connection impedance between negative charge terminals of the two adjacent battery packs; and a resistance ratio of the positive resistor to the negative resistor in the resistor pair satisfies a battery pack current sharing condition.

The battery pack current sharing condition includes a requirement for setting the resistance ratio of the positive resistor to the negative resistor in the resistor pair to ensure current sharing of the battery packs under different cases.

As can be learned from the above description, this embodiment achieves current sharing of the battery packs in all cases. Specifically, this embodiment achieves current sharing of the battery packs by adjusting the resistance ratio of the positive resistor to the negative resistor in the resistor pair. The above description is used as an example again, that is, when there are four battery packs and current sharing is required on the battery packs:

When cell internal resistances of the battery packs are identical, the following can be obtained:
$3 \times {R}_{1 +} = {R}_{1 -}$

It can be learned that the resistance ratio of the positive resistor to the negative resistor is 1/3 for achieving current sharing of the battery packs. The resistance ratio of the positive resistor to the negative resistor being 1/3 is a sub-condition of the battery pack current sharing condition.

This embodiment is used for example only, the resistance ratio of the positive resistor to the negative resistor in other cases can be calculated based on the actual circuit, and details are not described herein.

It can be seen from the above description that this embodiment achieves current sharing of the battery packs by setting the resistance ratio of the positive resistor to the negative resistor.

It should be noted that the resistance ratio of the positive resistor to the negative resistor can be calculated in advance based on the number of the battery packs and stored in the battery pack current sharing condition. During actual application, a corresponding resistance ratio is searched through matching in the battery pack current sharing condition based on the actual number of the battery packs. It should be noted that when setting the resistance ratio of the positive resistor to the negative resistor, the length and cross-sectional area of the corresponding wire can be adjusted to ensure that the resistance ratio of the positive resistor to the negative resistor satisfies the battery pack current sharing condition.

Further, if cell internal resistances of all of the plurality of battery packs connected in parallel are identical, a first resistance ratio of the positive resistor to the negative resistor in the resistor pair satisfies:
$\left(N-i\right) {R}_{i +} = {iR}_{i -}$

N is the number of the battery packs, i is a serial number of the resistor pair, a serial number of a resistor pair closest to a positive connection terminal of the charge/discharge apparatus is 1, *R*_{*i*+} is the positive resistor, and *R*_{*i*-} is the negative resistor.

FIG. 4 is a schematic diagram of an indeterminate number of battery packs connected in parallel in this embodiment.

Resistors RA and RB have equivalent resistances of the connection terminal impedance and the wire impedance between positive and negative connection terminals of a charge/discharge apparatus and the battery packs connected in parallel.

R_{c1} to R_{cN} are a first cell internal resistance to an N^{th} cell internal resistance; R₁₊ to R_{N-1+} are a first positive equivalent resistance to an (N-1)^{th} positive equivalent resistance; R₁₋ to R_{N-1-} are a first negative equivalent resistance to an (N-1)^{th} negative equivalent resistance; i₁ to i_{N} are a charge current of a first battery pack to a charge current of an N^{th} battery pack; and iₛ₁ to i_{sN} are branch currents.

According to Kirchhoff's current theorem, the following can be obtained:
${i}_{s 1} = {i}_{2} + {i}_{3} + ⋯ + {i}_{N}$
${i}_{s 2} = {i}_{3} + {i}_{4} + ⋯ + {i}_{N}$
${i}_{s 3} = {i}_{1} + {i}_{2}$
${i}_{s 4} = {i}_{1} + {i}_{2} + ⋯ + {i}_{N - 1}$

When the cell internal resistances of all the battery packs are identical, according to Kirchhoff's voltage theorem, the following can be obtained

The first mesh:
$\left(N-1\right) \times i \times {R}_{1 +} + i \times Rc = i \times Rc + i \times {R}_{1 -}$
$\left(N-1\right) \times {R}_{1 +} = 1 \times {R}_{1 -}$

The second mesh:
$\left(N-2\right) \times i \times {R}_{2 +} + i \times Rc = 2 \times i \times {R}_{2 -} + i \times Rc$
$\left(N-2\right) \times {R}_{2 +} = 2 \times {R}_{2 -}$

The (N-1)^{th} mesh:
$i \times {R}_{N - 1 +} + i \times Rc = \left(N-1\right) \times i \times {R}_{N - 1 -} + i \times Rc$
$\left(N-\left(N-1\right)\right) {R}_{N - 1 +} = \left(N-1\right) \times {R}_{N - 1 -}$

It can be deduced based on the above equations that to achieve current sharing of the battery packs, the first resistance ratio of the positive resistor to the negative resistor in the resistor pair needs to satisfy:
$\left(N-i\right) {R}_{i +} = {iR}_{i -}$

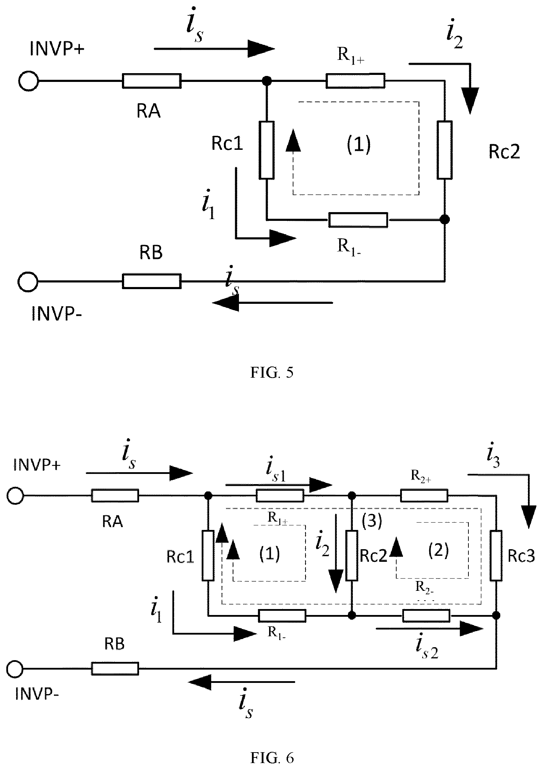

To further explain this embodiment, the different cases are illustrated as follows:
1. Referring to FIG. 5, when there are two battery packs:
   According to Kirchhoff's voltage theorem, the following can be obtained:
   ${i}_{2} \left({R}_{1 +}+{R}_{c 2}\right) = {i}_{1} \left({R}_{1 -}+{R}_{c 1}\right)$

When the cell internal resistances of all the battery packs are identical, that is, when *R*_{*c*1} = *R*_{*c*2} = *R_{c},* the following can be obtained:
${i}_{2} \times {R}_{1 +} + {i}_{2} \times {R}_{c} = {i}_{1} \times {R}_{1 -} + {i}_{1} \times {R}_{c}$

When current sharing is required on the battery packs, that is, when *i*₁ = *i*₂ = *i*, the following can be obtained:
${R}_{1 +} = {R}_{1 -}$

That is, when there are two battery packs, the battery pack current sharing condition is the resistance ratio of *R*₁₊ to *R*₁₋ being 1.

2. Referring to FIG. 6, when there are three battery packs:

According to Kirchhoff's voltage theorem, the following can be obtained:

The first mesh:
${i}_{s 1} \times {R}_{1 +} + {i}_{2} \times {R}_{c 2} = {i}_{1} \left({R}_{1 -}+{R}_{c 1}\right)$

The second mesh:
${i}_{3} \times {R}_{2 +} + {i}_{3} \times {R}_{c 3} = {i}_{s 2} \times {R}_{2 -} + {i}_{2} \times {R}_{c 2}$

The last mesh:
${i}_{s 1} \times {R}_{1 +} + {i}_{3} \times {R}_{2 +} + {i}_{3} \times {R}_{c 3} = {i}_{s 2} \times {R}_{2 -} + {i}_{1} \times \left({R}_{c 1}+{R}_{1 -}\right)$

According to Kirchhoff's current theorem, the following can be obtained:
${i}_{s 1} = {i}_{2} + {i}_{3}$
${i}_{s 2} = {i}_{1} + {i}_{2}$

When the cell internal resistances of all the battery packs are identical, that is, when *R*_{*c*1} = *R*_{*c*2} = *R*_{*c*3} = *R_{c},* and when current sharing is required on the battery packs, the following can be obtained:

The first mesh:
$2 \times {R}_{1 +} = {R}_{1 -}$

The second mesh:
${R}_{2 +} = 2 \times {R}_{2 -}$

The last mesh:
$2 \times {R}_{1 +} + {R}_{2 +} = 2 \times {R}_{2 -} + {R}_{1 -}$

That is, when there are three battery packs, the battery pack current sharing condition is the resistance ratio of *R*₁₊ to *R₁₋* being 1/2, and the resistance ratio of *R*₂₊ to *R*₂₋ being 2/1.

3. Referring to FIG. 4, when there are four battery packs:
According to Kirchhoff's current theorem, the following can be obtained:
${i}_{s 1} = {i}_{2} + {i}_{3} + {i}_{4}$
${i}_{s 2} = {i}_{3} + {i}_{4}$
${i}_{s 3} = {i}_{1} + {i}_{2}$
${i}_{s 4} = {i}_{1} + {i}_{2} + {i}_{3}$

When the cell internal resistances of all the battery packs are identical, that is, when *R*_{*c*1} = *R*_{*c*2} = *R*_{*c*3} = *R_{c},* and when current sharing is required on the battery packs, according to Kirchhoff's voltage theorem, the following can be obtained:

The first mesh:
$3 \times {R}_{1 +} = {R}_{1 -}$

The second mesh:
${R}_{2 +} = {R}_{2 -}$

The third mesh:
${R}_{3 +} = 3 \times {R}_{3 -}$

The last mesh:
$3 \times {R}_{1 +} + 2 \times {R}_{2 +} + {R}_{3 +} = {R}_{1 -} + 2 \times {R}_{2 -} + 3 \times {R}_{3 -}$

That is, when there are four battery packs, the battery pack current sharing condition is the resistance ratio of *R*₁₊ to *R*₁₋ being 1/3, the resistance ratio of *R*₂₊ to *R*₂₋ being 1, and the resistance ratio of *R*₃₊ to *R*₃₋ being 3/1.

Other cases can be calculated by analogy with reference to the above descriptions, and details are not described herein. It should be understood that only the resistance ratio of the positive resistor to the negative resistor is limited in this embodiment, but the specific resistances of the positive resistor and the negative resistor may be set based on the resistance ratio and actual application scenarios and needs.

This embodiment can accurately obtain the first resistance ratio of the positive resistor to the negative resistor in the resistor pair when the cell internal resistances of all the battery packs are identical.

Further, if a cell internal resistance of at least one battery pack is different from cell internal resistances of the other battery packs, the positive resistor and the negative resistor in the resistor pair satisfy a second resistance ratio, and the second resistance ratio is calculated based on the cell internal resistance of each of the battery packs.

When not all battery packs have the same cell internal resistance, the second resistance ratio of the positive resistor to the negative resistor is calculated based on Kirchhoff's voltage theorem and the actual cell internal resistance of each of the battery packs, to achieve current sharing of the battery packs.

Referring to FIG. 5 again, two battery packs are used as an example for description:

According to Kirchhoff's voltage theorem, the following can be obtained:
${i}_{2} \left({R}_{1 +}+{R}_{c 2}\right) = {i}_{1} \left({R}_{1 -}+{R}_{c 1}\right)$

When current sharing is required on the battery packs, that is, when *i*₁ = *i*₂ = *i*, the following can be obtained:
${R}_{1 +} + {R}_{c 2} = {R}_{1 -} + {R}_{c 1}$

When the cell internal resistances *R*_{*c*1} and *R*_{*c*2} of the battery packs are known, the resistance ratio of *R*₁₊ to *R*₁₋ can be obtained by substituting *R*_{*c*1} and *R*_{*c*2} into the above equations.

Referring to FIG. 6 again, three battery packs are used as an example for description:

According to Kirchhoff's voltage theorem, the following can be obtained:

The first mesh:
${i}_{s 1} \times {R}_{1 +} + {i}_{2} \times {R}_{c 2} = {i}_{1} \left({R}_{1 -}+{R}_{c 1}\right)$

The second mesh:
${i}_{3} \times {R}_{2 +} + {i}_{3} \times {R}_{c 3} = {i}_{s 2} \times {R}_{2 -} + {i}_{2} \times {R}_{c 2}$

The last mesh:
${i}_{s 1} \times {R}_{1 +} + {i}_{3} \times {R}_{2 +} + {i}_{3} \times {R}_{c 3} = {i}_{s 2} \times {R}_{2 -} + {i}_{1} \times \left({R}_{c 1}+{R}_{1 -}\right)$

According to Kirchhoff's current theorem, the following can be obtained:
${i}_{s 1} = {i}_{2} + {i}_{3}$
${i}_{s 2} = {i}_{1} + {i}_{2}$

When current sharing is required on the battery packs, that is, when *i*₁ = *i*₂ = *i*₃ =*i*, the following can be obtained:

The first mesh:
$2 {R}_{1 +} + {R}_{c 2} = {R}_{1 -} + {R}_{c 1}$

The second mesh:
${R}_{2 +} + {R}_{c 3} = {R}_{2 -} + {R}_{c 2}$

The last mesh:
${R}_{1 +} + {R}_{2 +} + {R}_{c 3} = {R}_{2 -} + {R}_{c 1} + {R}_{1 -}$

When the cell internal resistances *R*_{*c*1}, *R*_{*c*2} and *R*_{*c*3} of the battery packs are known, the resistance ratio of *R*₁₊ to *R*₁₋ and the resistance ratio of *R*₂₊ to *R*₂₋ can be obtained by substituting *R*_{*c*1}, *R*_{*c*2} and *R*_{*c*3} into the above equations.

In this embodiment, only the examples of two battery packs and three battery packs are illustrated, and the second resistance ratio of the positive resistor to the negative resistor in other cases can be calculated by analogy, and details are not described herein.

This embodiment can accurately calculate the second resistance ratio of the positive resistor to the negative resistor in each resistor pair when the cell internal resistances of all the battery packs are not exactly identical.

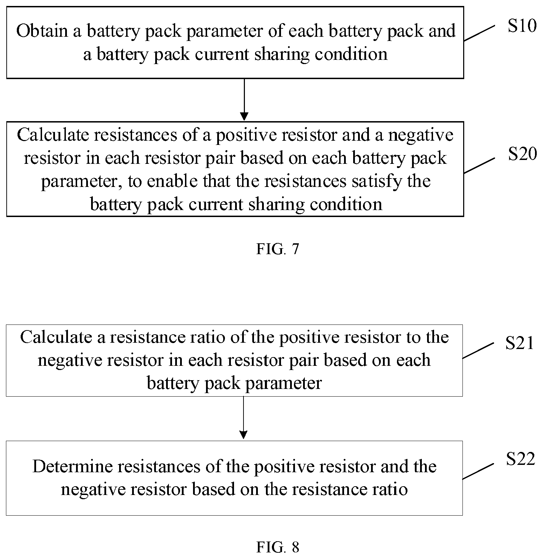

Further, the present disclosure provides a design method for a battery pack parallel circuit. FIG. 7 is a flowchart of an embodiment of the design method for a battery pack parallel circuit according to the present disclosure. The method includes:
Step S10: A battery pack parameter of each battery pack and a battery pack current sharing condition are obtained.

The battery pack parameter includes a cell internal resistance of each battery pack. The battery pack current sharing condition includes a requirement for setting the resistance ratio of the positive resistor to the negative resistor in the resistor pair to ensure current sharing of the battery pack under different cases.

Step S20: Resistances of the positive resistor and the negative resistor in each resistor pair are calculated based on each battery pack parameter, to enable that the resistances satisfy the battery pack current sharing condition, where the positive resistor has an equivalent resistance of a connection impedance between positive charge terminals of two adj acent battery packs, and the negative resistor has an equivalent resistance of a connection impedance between negative charge terminals of the two adjacent battery packs.

The resistance ratio of the positive resistor to the negative resistor can be calculated in advance in different cases and stored in the battery pack current sharing condition. During actual application, a corresponding resistance ratio of the positive resistor to the negative resistor is searched through matching in the battery pack current sharing condition based on the corresponding case. It should be noted that when setting the resistance ratio of the positive resistor to the negative resistor, the length and cross-sectional area of the corresponding wire can be adjusted to ensure that the resistance ratio of the positive resistor to the negative resistor achieve the battery pack current sharing condition.

The method is applied to the battery pack parallel circuit. For the structure of the battery pack parallel circuit, refer to the above embodiments, and details are not described herein. The implementation process herein is the same as the above structure embodiments and can be performed with reference to the above embodiments.

Further, referring to FIG. 8, the step S20 includes:
Step S21: A resistance ratio of the positive resistor to the negative resistor in each resistor pair is calculated based on each battery pack parameter.

Step S22: The resistances of the positive resistor and the negative resistor are determined based on the resistance ratio.

It can be learned from the above embodiments that current sharing of the battery packs can be achieved on the basis of the circuit by adjusting the resistance ratio of the positive resistor to the negative resistor. After calculating the resistance ratio of the positive resistor to the negative resistor, the specific resistances of the positive resistor and the negative resistor can be obtained with reference to the actual application scenarios and needs.

Further, the step S21 includes:
Step S211: A cell internal resistance of each battery pack is obtained from each battery pack parameter.

Step S212: Whether cell internal resistances of all the battery packs are identical is determined.

Step S213: If the cell internal resistances of all the battery packs are identical, it is determined that the resistance ratio of the positive resistor to the negative resistor in each resistor pair satisfies:
$\left(N-i\right) {R}_{i +} = {iR}_{i -}$

N is the number of the battery packs, i is a serial number of the resistor pair, a serial number of a resistor pair closest to a positive connection terminal of the charge/discharge apparatus is 1, *R*_{*i*+} is the positive resistor, and *R*_{*i*-} is the negative resistor.

After the step S212, the method further includes:
Step S214: The cell internal resistance of each battery pack is obtained if a cell internal resistance of at least one battery pack is different from cell internal resistances of the other battery packs.

Step S215: The resistance ratio of the positive resistor to the negative resistor in each resistor pair is calculated based on Kirchhoff s voltage theorem and the cell internal resistance of each battery pack.

For different cases in which the cell internal resistances of all the battery packs are or not identical, refer to the above descriptions of the circuit, and details are not described herein.

This embodiment can accurately obtain the resistance ratio of the positive resistor to the negative resistor in the resistor pair in different cases.

The present disclosure further provides a battery including a shell and a battery pack parallel circuit. For the structure of the battery pack parallel circuit, refer to the above embodiments, and details are not described herein. Certainly, since the battery of this embodiment adopts the technical solution of the above battery pack parallel circuit, the battery has all the beneficial effects of the above battery pack parallel circuit.

The present disclosure further provides a charge/discharge system, including a charge/discharge apparatus and a battery pack parallel circuit. For the structure of the battery pack parallel circuit, refer to the above embodiments, and details are not described herein. Certainly, since the charge/discharge system of this embodiment adopts the technical solution of the above battery pack parallel circuit, the charge/discharge system has all the beneficial effects of the above battery pack parallel circuit.

It should be noted that terms "including", "comprising" or any other variants thereof are intended to cover non-exclusive inclusions, such that a process, method, article or system including a series of elements includes not only those elements but also other elements not explicitly listed, or elements inherent to such a process, method, article or system. Without further limitation, an element qualified by the phrase "including a ..." does not exclude the presence of an additional identical element in the process, method, article or system including the element. The serial numbers of the embodiments of the present disclosure are merely for description and do not represent a preference of the embodiments.

The above is merely a favorable embodiment of the present disclosure and does not constitute a limitation on the patent scope as defined in the appended claims. Any equivalent structure or equivalent process change made by using the specification and the drawings of the present disclosure, or direct or indirect application thereof in other related technical fields, should still fall in the protection scope of the patent which is defined by the appended claims.

## Claims

1. A battery pack parallel circuit, wherein the circuit is connected to a charge/discharge apparatus, the circuit comprises a battery module (100) formed by a plurality of battery packs (110) with a cell internal resistance, that are connected in parallel, and battery packs (110) located at two ends of the battery module (100) are a first end battery pack and a second end battery pack respectively, and
a positive terminal of the first end battery pack is configured as a positive terminal of the circuit and connected to a positive connection terminal of the charge/discharge apparatus, and a negative terminal of the second end battery pack is configured as a negative terminal of the circuit and connected to a negative connection terminal of the charge/discharge apparatus; **characterized in that**
the battery module (100) comprises a resistor pair formed between each two adjacent battery packs (110) by a positive resistor and a negative resistor; wherein the positive resistor has an equivalent resistance of a connection impedance between positive charge terminals of the two adjacent battery packs (110), and the negative resistor has an equivalent resistance of a connection impedance between negative charge terminals of the two adjacent battery packs (110); wherein each resistor pair and the cell internal resistance of the two adjacent battery packs (110) define a mesh; and
the first end battery pack is the battery pack closest to one terminal of the charge/discharge apparatus, the second end battery pack is the battery pack farthest from the one terminal of the charge/discharge apparatus, and
one terminal of the positive resistor in the first end battery pack is configured as the positive terminal of the first end battery pack, one terminal of the negative resistor in the second end battery pack is configured as the negative terminal of the second end battery pack, and
wherein a resistance ratio of the positive resistor to the negative resistor in the resistor pair satisfies a battery pack current sharing condition; and
when setting the resistance ratio of the positive resistor to the negative resistor in each mesh, a length and a cross-sectional area of a corresponding wire are adjusted to ensure that the resistance ratio of the positive resistor to the negative resistor satisfies the battery pack current sharing condition which ensures that the current flowing through each internal resistance is equal.

2. The battery pack parallel circuit according to claim 1, **characterized in that** if the cell internal resistances of all of the plurality of battery packs (110) connected in parallel are identical, a first resistance ratio of the positive resistor to the negative resistor in the resistor pair satisfies: $\left(N-i\right) {R}_{i +} = i {R}_{i -}$ wherein N is a number of the battery packs (110), i is a serial number of a resistor pair, a serial number of a resistor pair closest to the positive connection terminal of the charge/discharge apparatus is l, *R*_{*i*+} is the positive resistor, and *R*_{*i*-} is the negative resistor.

3. The battery pack parallel circuit according to claim l, **characterized in that** if the cell internal resistance of at least one battery pack (110) is different from cell internal resistances of the other battery packs (110), the positive resistor and the negative resistor in the resistor pair satisfy a second resistance ratio, and the second resistance ratio is calculated based on Kirchhoffs voltage theorem and the cell internal resistance of each of the battery packs (110).

4. The battery pack parallel circuit according to claim l, **characterized in that** the charge/discharge apparatus comprises a charger, an inverter, or a converter.

5. A design method for a battery pack parallel circuit, **characterized in that** the design method is applied to the battery pack parallel circuit according to any one of claims 1 to 4, and the design method comprises:
obtaining a battery pack parameter of each battery pack (110) and a battery pack current sharing condition; and
calculating resistances of a positive resistor and a negative resistor in each resistor pair based on each battery pack parameter, to enable that the resistances satisfy the battery pack current sharing condition, wherein the positive resistor has an equivalent resistance of a connection impedance between positive charge terminals of two adjacent battery packs (110), and the negative resistor has an equivalent resistance of a connection impedance between negative charge terminals of the two adjacent battery packs (110).

6. The design method for the battery pack parallel circuit according to claim 5, **characterized in that** the step of calculating the resistances of the positive resistor and the negative resistor in each resistor pair based on each battery pack parameter comprises:
calculating a resistance ratio of the positive resistor to the negative resistor in each resistor pair based on each battery pack parameter; and
determining the resistances of the positive resistor and the negative resistor based on the resistance ratio.

7. The design method for the battery pack parallel circuit according to claim 6, **characterized in that** the step of calculating the resistance ratio of the positive resistor to the negative resistor in each resistor pair based on each battery pack parameter comprises:
obtaining a cell internal resistance of each battery pack (110) from each battery pack parameter;
determining whether cell internal resistances of all the battery packs (110) are identical; and
if the cell internal resistances of all the battery packs (110) are identical, determining that the resistance ratio of the positive resistor to the negative resistor in each resistor pair satisfies: $\left(N-i\right) {R}_{i +} = i {R}_{i -}$
wherein N is a number of the battery packs (110), i is a serial number of a resistor pair, a serial number of a resistor pair closest to a positive connection terminal of the charge/discharge apparatus is 1, *R*_{*i*+} is the positive resistor, and *Rᵢ₋* is the negative resistor.

8. The design method for the battery pack parallel circuit according to claim 7, **characterized in that** after the step of determining whether the cell internal resistances of all the battery packs (110) are identical, the design method further comprises:
obtaining the cell internal resistance of each battery pack (110) if a cell internal resistance of at least one battery pack (110) is different from cell internal resistances of the other battery packs (110); and
calculating the resistance ratio of the positive resistor to the negative resistor in each resistor pair based on Kirchhoffs voltage theorem and the cell internal resistance of each battery pack (110).

9. The design method for the battery pack parallel circuit according to claim 5, **characterized in that** the battery pack current sharing condition comprises a resistance ratio of the positive resistor to the negative resistor, wherein the resistance ratio was calculated and stored in advance in different cases.

10. A battery, **characterized by** comprising a shell and the battery pack parallel circuit according to any one of claims 1 to 4.

11. A charge/discharge system, **characterized by** comprising a charge/discharge apparatus and the battery pack parallel circuit according to any one of claims 1 to 4.

## Patentansprüche

1. Batteriepack-Parallelschaltung, wobei die Schaltung mit einer Lade-/Entladevorrichtung verbunden ist, wobei die Schaltung ein Batteriemodul (100) umfasst, das aus einer Vielzahl von Batteriepacks (110) mit einem Zelleninnenwiderstand gebildet ist, die parallel geschaltet sind, und wobei die an zwei Enden des Batteriemoduls (100) befindlichen Batteriepacke (110) jeweils ein erstes Endbatteriepack bzw. ein zweites Endbatteriepack sind, und
ein Pluspol des ersten Endbatteriepacks als Pluspol der Schaltung ausgebildet und mit einem positiven Anschlussterminal der Lade-/Entladevorrichtung verbunden ist, und ein Minuspol des zweiten Endbatteriepacks als Minuspol der Schaltung ausgebildet und mit einem negativen Anschlussterminal der Lade-/Entladevorrichtung verbunden ist; **dadurch gekennzeichnet, dass**
das Batteriemodul (100) ein Widerstandspaar umfasst, das zwischen jeweils zwei benachbarten Batteriepacks (110) durch einen positiven Widerstand und einen negativen Widerstand gebildet ist; wobei der positive Widerstand einen äquivalenten Widerstand einer Verbindungsimpedanz zwischen positiven Ladeterminals der zwei benachbarten Batteriepacke (110) aufweist, und der negative Widerstand einen äquivalenten Widerstand einer Verbindungsimpedanz zwischen negativen Ladeterminals der zwei benachbarten Batteriepacke (110) aufweist; wobei jedes Widerstandspaar und der Zelleninnenwiderstand der zwei benachbarten Batteriepacke (110) eine Masche definieren; und
das erste Endbatteriepack das Batteriepack ist, das einem Terminal der Lade-/Entladevorrichtung am nächsten liegt, das zweite Endbatteriepack das Batteriepack ist, das am weitesten von dem einen Terminal der Lade-/Entladevorrichtung entfernt ist, und
ein Terminal des positiven Widerstands in dem ersten Endbatteriepack als der Pluspol des ersten Endbatteriepacks ausgebildet ist, ein Terminal des negativen Widerstands in dem zweiten Endbatteriepack als der Minuspol des zweiten Endbatteriepacks ausgebildet ist, und
wobei ein Widerstandsverhältnis des positiven Widerstands zum negativen Widerstand in dem Widerstandspaar eine Batteriepack-Stromverteilungsbedingung erfüllt; und
wobei beim Einstellen des Widerstandsverhältnisses des positiven Widerstands zum negativen Widerstand in jeder Masche eine Länge und eine Querschnittsfläche einer entsprechenden Leitung so angepasst werden, dass sichergestellt wird, dass das Widerstandsverhältnis des positiven Widerstands zum negativen Widerstand die Batteriepack-Stromverteilungsbedingung erfüllt, die sicherstellt, dass der durch jeden Innenwiderstand fließende Strom gleich ist.

2. Batteriepack-Parallelschaltung nach Anspruch 1, **dadurch gekennzeichnet, dass**, wenn die Zelleninnenwiderstände aller der parallel geschalteten Vielzahl von Batteriepacks (110) identisch sind, ein erstes Widerstandsverhältnis des positiven Widerstands zum negativen Widerstand in dem Widerstandspaar Folgendes erfüllt: $\left(N-i\right) {R}_{i +} = i {R}_{i -}$ wobei N eine Anzahl der Batteriepacks (110) ist, i eine laufende Nummer eines Widerstandspaares ist, eine laufende Nummer eines dem positiven Anschlussterminal der Lade-/Entladevorrichtung am nächsten liegenden Widerstandspaares 1 ist, *R*_{*i*+} der positive Widerstand ist, und *R*_{*i*-} der negative Widerstand ist.

3. Batteriepack-Parallelschaltung nach Anspruch 1, **dadurch gekennzeichnet, dass**, wenn der Zelleninnenwiderstand mindestens eines Batteriepacks (110) sich von den Zelleninnenwiderständen der anderen Batteriepacke (110) unterscheidet, der positive Widerstand und der negative Widerstand in dem Widerstandspaar ein zweites Widerstandsverhältnis erfüllen, und das zweite Widerstandsverhältnis auf Grundlage des Kirchhoffschen Spannungssatzes und des Zelleninnenwiderstands jedes der Batteriepacke (110) berechnet wird.

4. Batteriepack-Parallelschaltung nach Anspruch 1, **dadurch gekennzeichnet, dass** die Lade-/Entladevorrichtung ein Ladegerät, einen Wechselrichter oder einen Wandler umfasst.

5. Entwurfsverfahren für eine Batteriepack-Parallelschaltung, **dadurch gekennzeichnet, dass** das Entwurfsverfahren auf die Batteriepack-Parallelschaltung nach einem der Ansprüche 1 bis 4 angewendet wird, und das Entwurfsverfahren Folgendes umfasst:
Erhalten eines Batteriepackparameters jedes Batteriepacks (110) und einer Batteriepack-Stromverteilungsbedingung; und
Berechnen von Widerständen eines positiven Widerstands und eines negativen Widerstands in jedem Widerstandspaar auf Grundlage jedes Batteriepackparameters, um zu ermöglichen, dass die Widerstände die Batteriepack-Stromverteilungsbedingung erfüllen, wobei der positive Widerstand einen äquivalenten Widerstand einer Verbindungsimpedanz zwischen positiven Ladeterminals zweier benachbarter Batteriepacke (110) aufweist, und der negative Widerstand einen äquivalenten Widerstand einer Verbindungsimpedanz zwischen negativen Ladeterminals der zwei benachbarten Batteriepacke (110) aufweist.

6. Entwurfsverfahren für die Batteriepack-Parallelschaltung nach Anspruch 5, **dadurch gekennzeichnet, dass** der Schritt des Berechnens der Widerstände des positiven Widerstands und des negativen Widerstands in jedem Widerstandspaar auf Grundlage jedes Batteriepackparameters Folgendes umfasst:
Berechnen eines Widerstandsverhältnisses des positiven Widerstands zum negativen Widerstand in jedem Widerstandspaar auf Grundlage jedes Batteriepackparameters; und
Bestimmen der Widerstände des positiven Widerstands und des negativen Widerstands auf Grundlage des Widerstandsverhältnisses.

7. Entwurfsverfahren für die Batteriepack-Parallelschaltung nach Anspruch 6, **dadurch gekennzeichnet, dass** der Schritt des Berechnens des Widerstandsverhältnisses des positiven Widerstands zum negativen Widerstand in jedem Widerstandspaar auf Grundlage jedes Batteriepackparameters Folgendes umfasst:
Erhalten eines Zelleninnenwiderstands jedes Batteriepacks (110) aus jedem Batteriepackparameter;
Bestimmen, ob Zelleninnenwiderstände aller Batteriepacks (110) identisch sind; und
wenn die Zelleninnenwiderstände aller Batteriepacks (110) identisch sind, Bestimmen, dass das Widerstandsverhältnis des positiven Widerstands zum negativen Widerstand in jedem Widerstandspaar Folgendes erfüllt: $\left(N-i\right) {R}_{i +} = i {R}_{i -}$
wobei N eine Anzahl der Batteriepacke (110) ist, i eine laufende Nummer eines Widerstandspaares ist, eine laufende Nummer eines einem positiven Anschlussterminal der Lade-/Entladevorrichtung am nächsten liegenden Widerstandspaares 1 ist, *R*_{*i*+} der positive Widerstand ist, und *R*_{*i*-} der negative Widerstand ist.

8. Entwurfsverfahren für die Batteriepack-Parallelschaltung nach Anspruch 7, **dadurch gekennzeichnet, dass** nach dem Schritt des Bestimmens, ob die Zelleninnenwiderstände aller Batteriepacke (110) identisch sind, das Entwurfsverfahren ferner Folgendes umfasst:
Erhalten des Zelleninnenwiderstands jedes Batteriepacks (110), wenn ein Zelleninnenwiderstand mindestens eines Batteriepacks (110) sich von Zelleninnenwiderständen der anderen Batteriepacke (110) unterscheidet; und
Berechnen des Widerstandsverhältnisses des positiven Widerstands zum negativen Widerstand in jedem Widerstandspaar auf Grundlage des Kirchhoffschen Spannungssatzes und des Zelleninnenwiderstands jedes Batteriepacks (110).

9. Entwurfsverfahren für die Batteriepack-Parallelschaltung nach Anspruch 5, **dadurch gekennzeichnet, dass** die Batteriepack-Stromverteilungsbedingung ein Widerstandsverhältnis des positiven Widerstands zum negativen Widerstand umfasst, wobei das Widerstandsverhältnis im Voraus in verschiedenen Fällen berechnet und gespeichert wurde.

10. Batterie, **gekennzeichnet dadurch, dass** sie ein Gehäuse und die Batteriepack-Parallelschaltung nach einem der Ansprüche 1 bis 4 umfasst.

11. Lade-/Entladesystem, **gekennzeichnet dadurch, dass** es eine Lade-/Entladevorrichtung und die Batteriepack-Parallelschaltung nach einem der Ansprüche 1 bis 4 umfasst.

## Revendications

1. Circuit parallèle de blocs-batteries, dans lequel le circuit est connecté à un appareil de charge/décharge, ledit circuit comprenant un module de batterie (100) formé d'une pluralité de blocs-batteries (110) présentant une résistance interne de cellule et connectés en parallèle, les blocs-batteries (110) disposés aux deux extrémités du module de batterie (100) constituant respectivement un premier bloc-batterie d'extrémité et un second bloc-batterie d'extrémité, et
une borne positive du premier bloc-batterie d'extrémité est configurée comme une borne positive du circuit et est connectée à une borne de connexion positive de l'appareil de charge/décharge, et une borne négative du second bloc-batterie d'extrémité est configurée comme une borne négative du circuit et est connectée à une borne de connexion négative de l'appareil de charge/décharge; **caractérisé en ce que**
le module de batterie (100) comprend une paire de résistances formée entre chaque deux blocs-batteries (110) adjacents par une résistance positive et une résistance négative; dans laquelle la résistance positive présente une résistance équivalente correspondant à une impédance de connexion entre des bornes de charge positives des deux blocs-batteries (110) adjacents, et la résistance négative présente une résistance équivalente correspondant à une impédance de connexion entre des bornes de charge négatives des deux blocs-batteries (110) adjacents; dans laquelle chaque paire de résistances et la résistance interne de cellule des deux blocs-batteries (110) adjacents définissent une maille; et
le premier bloc-batterie d'extrémité est le bloc-batterie le plus proche d'une borne de l'appareil de charge/décharge, le second bloc-batterie d'extrémité étant le bloc-batterie le plus éloigné de ladite borne de l'appareil de charge/décharge, et
une borne de la résistance positive du premier bloc-batterie d'extrémité est configurée comme la borne positive du premier bloc-batterie d'extrémité, une borne de la résistance négative du second bloc-batterie d'extrémité étant configurée comme la borne négative du second bloc-batterie d'extrémité, et
dans lequel un rapport de résistance entre la résistance positive et la résistance négative de la paire de résistances satisfait une condition de partage du courant entre les blocs-batteries; et
lors de la détermination du rapport de résistance entre la résistance positive et la résistance négative dans chaque maille, une longueur et une section transversale d'un fil correspondant sont ajustées afin de garantir que le rapport de résistance entre la résistance positive et la résistance négative satisfait la condition de partage du courant entre les blocs-batteries, ce qui garantit que le courant traversant chaque résistance interne est égal.

2. Circuit parallèle de blocs-batteries selon la revendication 1, **caractérisé en ce que**, si les résistances internes de cellule de l'ensemble de la pluralité de blocs-batteries (110) connectés en parallèle sont identiques, un premier rapport de résistance entre la résistance positive et la résistance négative de la paire de résistances satisfait: $\left(N-i\right) {R}_{i +} = i {R}_{i -}$ dans lequel N est un nombre de blocs-batteries (110), i est un numéro de série d'une paire de résistances, le numéro de série d'une paire de résistances la plus proche de la borne de connexion positive de l'appareil de charge/décharge étant 1, *R*_{*i*+} étant la résistance positive, et *R*_{*i*-} étant la résistance négative.

3. Circuit parallèle de blocs-batteries selon la revendication 1, **caractérisé en ce que**, si la résistance interne de cellule d'au moins un bloc-batterie (110) est différente des résistances internes de cellule des autres blocs-batteries (110), la résistance positive et la résistance négative de la paire de résistances satisfont un deuxième rapport de résistance, et le deuxième rapport de résistance est calculé sur la base du théorème des tensions de Kirchhoff et de la résistance interne de cellule de chacun des blocs-batteries (110).

4. Circuit parallèle de blocs-batteries selon la revendication 1, **caractérisé en ce que** l'appareil de charge/décharge comprend un chargeur, un onduleur ou un convertisseur.

5. Procédé de conception d'un circuit parallèle de blocs-batteries, **caractérisé en ce que** le procédé de conception est appliqué au circuit parallèle de blocs-batteries selon l'une quelconque des revendications 1 à 4, et **en ce que** le procédé de conception comprend:
l'obtention d'un paramètre de bloc-batterie de chaque bloc-batterie (110) et d'une condition de partage du courant entre les blocs-batteries; et
le calcul des résistances d'une résistance positive et d'une résistance négative dans chaque paire de résistances sur la base de chaque paramètre de bloc-batterie, afin de permettre auxdites résistances de satisfaire la condition de partage du courant entre les blocs-batteries, dans lequel la résistance positive présente une résistance équivalente correspondant à une impédance de connexion entre des bornes de charge positives de deux blocs-batteries (110) adjacents, et la résistance négative présente une résistance équivalente correspondant à une impédance de connexion entre des bornes de charge négatives des deux blocs-batteries (110) adjacents.

6. Procédé de conception d'un circuit parallèle de blocs-batteries selon la revendication 5, **caractérisé en ce que** l'étape de calcul des résistances de la résistance positive et de la résistance négative dans chaque paire de résistances sur la base de chaque paramètre de bloc-batterie comprend:
le calcul d'un rapport de résistance entre la résistance positive et la résistance négative dans chaque paire de résistances sur la base de chaque paramètre de bloc-batterie; et
la détermination des résistances de la résistance positive et de la résistance négative sur la base du rapport de résistance.

7. Procédé de conception d'un circuit parallèle de blocs-batteries selon la revendication 6, **caractérisé en ce que** l'étape de calcul du rapport de résistance entre la résistance positive et la résistance négative dans chaque paire de résistances sur la base de chaque paramètre de bloc-batterie comprend:
l'obtention d'une résistance interne de cellule de chaque bloc-batterie (110) à partir de chaque paramètre de bloc-batterie;
la détermination de savoir si les résistances internes de cellule de l'ensemble des blocs-batteries (110) sont identiques; et
si les résistances internes de cellule de l'ensemble des blocs-batteries (110) sont identiques, la détermination du fait que le rapport de résistance entre la résistance positive et la résistance négative dans chaque paire de résistances satisfait: $\left(N-i\right) {R}_{i +} = i {R}_{i -}$
dans lequel N est un nombre de blocs-batteries (110), i est un numéro de série d'une paire de résistances, le numéro de série d'une paire de résistances la plus proche d'une borne de connexion positive de l'appareil de charge/décharge étant 1, *R*_{*i*+} étant la résistance positive, et *R*_{*i*-} étant la résistance négative.

8. Procédé de conception d'un circuit parallèle de blocs-batteries selon la revendication 7, **caractérisé en ce qu'**après l'étape consistant à déterminer si les résistances internes de cellule de l'ensemble des blocs-batteries (110) sont identiques, le procédé de conception comprend en outre:
l'obtention de la résistance interne de cellule de chaque bloc-batterie (110) si la résistance interne de cellule d'au moins un bloc-batterie (110) est différente des résistances internes de cellule des autres blocs-batteries (110); et
le calcul du rapport de résistance entre la résistance positive et la résistance négative dans chaque paire de résistances sur la base du théorème des tensions de Kirchhoff et de la résistance interne de cellule de chaque bloc-batterie (110).

9. Procédé de conception d'un circuit parallèle de blocs-batteries selon la revendication 5, **caractérisé en ce que** la condition de partage du courant entre les blocs-batteries comprend un rapport de résistance entre la résistance positive et la résistance négative, ledit rapport de résistance ayant été calculé et enregistré à l'avance dans différents cas.

10. Batterie, **caractérisée en ce qu'**elle comprend une enveloppe et le circuit parallèle de blocs-batteries selon l'une quelconque des revendications 1 à 4.

11. Système de charge/décharge, **caractérisé en ce qu'**il comprend un appareil de charge/décharge et le circuit parallèle de blocs-batteries selon l'une quelconque des revendications 1 à 4.
